# EUROPEAN PATENT APPLICATION

(11) **EP 4 378 823 A1**
(43) Date of publication of application: **05.06.2024**
(21) Application number: 22383166.0
(22) Date of filing: 01.12.2022
(51) Int. Cl.: B64C 1/26

(54) **FITTING FOR AIRCRAFTS**

(71) Applicant: AIRBUS OPERATIONS, S.L.U., 28906 Getafe (Madrid) (ES)
(72) Inventor: VIVARACHO RODRIGUEZ, Rubén, 28906 GETAFE (MADRID) (ES); RAMIREZ BLANCO, Gonzalo, 28906 GETAFE (MADRID) (ES)
(74) Representative: Herrero & Asociados, S.L.

(57) **Abstract**

Fitting for aircrafts, comprising two angled pieces (1) joined to each other, each of them defining a first section (11) and a second section (12), an external plate (2) joined with both angled pieces (1), and a skin (3) joined to the external plate (2), the skin (3) being independent from the angled pieces (1).

It permits to discharge the radius of the fitting angles defined by the angled pieces, discharging both angles, assuring than there is no rivet or similar joining elements installed in the angled pieces, assuring no ply continuity in the marked area.

## Description

The present invention relates to a fitting for aircrafts, in particular, to a fitting having a T shape that is used for horizontal lifting surfaces of aircrafts, such as wings and horizontal tail planes.

### Background of the invention

Usually, the aircraft horizontal lifting surfaces, such as the wings and horizontal tail planes comprise at least two lateral boxes joined by a T-shaped fitting.

This T-shaped fitting is usually made from metal, e.g., made from titanium, which is the current preferred material based on stress assumptions.

An objective in the aeronautical industry is to substitute this metallic fitting by a carbon fiber fitting, and some initiatives have been made.

A T-shape fitting made from carbon fiber is known and comprises two structural angles and a structural external plate defining a rowing, which is cured in an autoclave.

However, the result of the tests made are not acceptable, because they show that a delamination occurs in the rowing area and in the interface between the structural angles and the structural external plate.

### Disclosure of the invention

Therefore, an objective of the present invention is to provide a fitting for aircrafts which is not made from metal, removing these delaminated areas, for obtaining an equivalent fitting to the traditional titanium ones giving response to the same stress and design requirements as the traditional fittings.

It is an object of the present invention to overcome the drawbacks of the fittings made from carbon, redesigning it to provide an improved fitting with the result of no delamination around the rowing area, which is the current issue on the tested designs.

The fitting for aircrafts according to the present invention is defined in claim 1, and optional additional features are included in the dependent claims.

In particular, the fitting for aircrafts according to the present invention comprises:
two angled pieces joined to each other, each of them defining a first section and a second section,
an external plate joined with both angled pieces, and
a skin joined to the external plate, the skin being independent from the angled pieces.

Advantageously, the angled pieces, the external plate, and the skin are made from carbon fiber plies.

Furthermore, the fitting also comprises preferably a central rib joined to at least one of the angled pieces.

According to a possible embodiment, the fitting according to the present invention can also comprise at least one shimming placed between the external plate and the skin, said at least one shimming being independent from the angled pieces.

Advantageously, the at least one shimming is made from carbon fiber plies.

Furthermore, a rowing is defined between the angled pieces and/or the external plate, said rowing being filled with fibers and/or a sealant.

According to a preferred embodiment, the external plate is joined to the skin by rivets, said rivets being displaced with respect to the angled pieces, and the central rib is also joined to the angled piece/s by a rivet.

Preferably, the central rib defines a longitudinal axis, which is displaced with respect to longitudinal axes defined by the first sections of the angled pieces.

Furthermore, a gap is defined between the angled pieces and the skin or the at least one shimming, if present, the gap being filled with a sealant.

Advantageously, the first and second sections of each angled piece define a right angle, and the first section of each angled piece is longer than the second section, so that each angled piece is joined to the external plate by its second section.

The technical effect obtained by the fitting according to the present invention is to discharge the radius of the fitting angles defined by the angled pieces, discharging both angles, assuring than there is no rivet or similar joining elements installed in the angled pieces, assuring no ply continuity in the marked area.

These two angled pieces only withstand the central rib shear load, without any contribution to the skin forces, the delamination in the roving, in a center location, disappears.

The fitting according to the present invention can be used with slight modifications to be adjusted to any specific aircraft design, such as including dihedral design in the fitting, or including the central rib in a single monolithic structure with the fitting, or partially, two parts, e.g., upper side integrated at the lower side.

In terms of sizing, in order to assure the strength of the fitting, is necessary to assure the following:
- The stacking of the external plate needs to be similar to the skin laminate, perhaps slightly increasing the number of plies if dihedral angle is introduced in the design;
- The shimming thickness needs to be equal to the L angle thickness in order to assure a flat surface;
- The composite angle stacking and the surface between the angled pieces and external plate needs to be dimensions as a normal rib connection.

From manufacturing point of view, this design is fully compatible with any manufacturing material technology, such as co-cured, co-bonded or resin transfer molding technology.

Furthermore, the fitting for aircrafts according to the present invention provides the following advantages, among others:
- It adds composite construction for a traditional metallic part, reducing the titanium dependency;
- It improves the weight of the fitting;
- It reduces the maintenance airplane tasks due to the certification of composite parts compared with the traditional metallic construction.

### Brief description of the drawings

For better understanding of what has been disclosed, some drawings in which, schematically and only by way of a non-limiting example, a practical case of embodiment is shown.
Figure 1 is a diagrammatical section view of the fitting for aircrafts of the present invention, according to a first embodiment; and
Figure 2 is a diagrammatical section view of the fitting for aircrafts of the present invention, according to a second embodiment.

### Description of a preferred embodiment

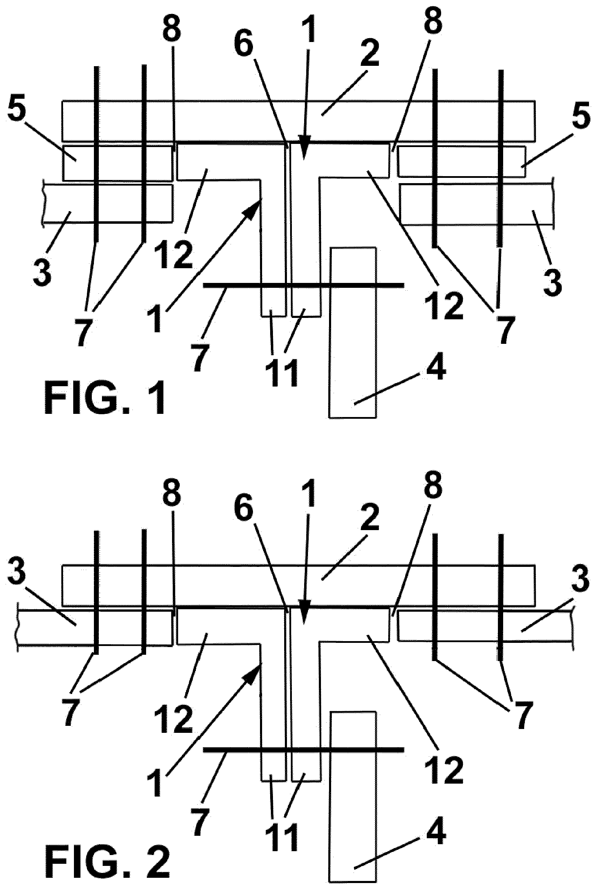

A preferred embodiment of the fitting for aircrafts according to the present invention is shown in Fig. 1.

This fitting has a T shape, and it is used for horizontal lifting surfaces of aircrafts, such as wings and horizontal tail planes.

In particular, this fitting for aircrafts comprises two angled pieces 1 joined to each other, each of them defining a first section 11 and a second section 12.

The first section 11 is longer than the second section 12 and both sections 11, 12 define a right angle, i.e., each angled piece 1 has a L shape.

These angled pieces 1 are preferably made from plies of carbon fiber and they are joined together by any suitable means.

The fitting according to the present invention also comprises an external plate 2, that with the angled pieces 1 define the T shape of the fitting.

This external plate 2 is also preferably made from plies of carbon fiber, and it is joined to the angled pieces 1 by any suitable means, preferably to the second sections 12 of the angled pieces 1.

Between the angled pieces 1 and/or the external plate 2 a rowing 6 is defined, i.e., a hollow zone placed in a central portion of the fitting. This rowing 6 is preferably filled with fibers and/or a sealant.

The fitting according to the present invention also comprises a skin 3, which is also preferably made from plies of carbon fiber, and it is joined to the external plate 2, but not to the angled pieces 1, i.e., the skin 3 is independent from the angled pieces 1, leaving a gap 8 between the skin 3 and the angled pieces 1.

In the embodiment shown in figure 1, the fitting according to the present invention also comprises a shimming 5, which is optional, and it is also preferably made from plies of carbon fibers. This shimming 5 is placed between the external plate 2 and the skin 3, being joined to both the external plate 2 and the skin 3, but not to the angled pieces 1, also leaving a gap 8 between the shimming 5 and the angled pieces 1.

The gap 8 between the angled pieces 1 and the skin 3 and/or the shimming 5 is preferably filled a sealant.

The fitting according to the present invention also comprises a central rib 4, that is joined only to one or both angled pieces 1.

As shown in figure 1, this central rib 4 is displaced with respect to the angled pieces 1, i.e., its longitudinal axis is displaced or offset with respect to the longitudinal axes of the first portions 11 of the angled pieces 1.

For joining some of the elements of the fitting according to the present invention rivets 7 are preferably used, but other joining elements can be used.

As shown in figure 1, rivets 7 are used for joining the external plate 2 with the skin 3 and with the shimming 5, if present, the rivets 7 crossing the external plate 2 and the skin 3 and the shimming 5, if present. Furthermore, also a rivet 7 is used for joining the central rib 4 to the angled pieces 1.

Figure 2 shows a second embodiment of the fitting according to the present invention. In this second embodiment the same numeral references have been used for the same elements.

The only difference with respect to the embodiment shown in figure 1 is that the fitting does not comprise the shimming 5.

## Claims

1. Fitting for aircrafts, **characterized in that** it comprises:
two angled pieces (1) joined to each other, each of them defining a first section (11) and a second section (12),
an external plate (2) joined with both angled pieces (1), and
a skin (3) joined to the external plate (2), the skin (3) being independent from the angled pieces (1).

2. Fitting for aircrafts according to claim 1, wherein the angled pieces (1), the external plate (2) and the skin (3) are made from carbon fiber.

3. Fitting for aircrafts according to claim 1 or 2, wherein the fitting also comprises a central rib (4) joined to at least one of the angled pieces (1).

4. Fitting for aircrafts according to any one of the previous claims, wherein the fitting also comprises at least one shimming (5) placed between the external plate (2) and the skin (3), said at least one shimming (5) being independent from the angled pieces (1).

5. Fitting for aircrafts according to claim 4, wherein the at least one shimming (5) is made from carbon fiber.

6. Fitting for aircrafts according to any one of the previous claims, wherein a rowing (6) is defined between the angled pieces (1) and/or the external plate (2), said rowing being filled with fibers and/or a sealant.

7. Fitting for aircrafts according to any one of the previous claims, wherein the external plate (2) is joined to the skin (3) by rivets (7), said rivets (7) being displaced with respect to the angled pieces (1).

8. Fitting for aircrafts according to claim 3, wherein the central rib (4) is joined to the angled piece/s by a rivet (7).

9. Fitting for aircrafts according to claim 3 or 8, wherein the central rib (4) defines a longitudinal axis, which is displaced with respect to longitudinal axes defined by the first sections (11) of the angled pieces (1).

10. Fitting for aircrafts according to any one of the previous claims, wherein a gap (8) is defined between the angled pieces (1) and the skin (3) or the at least one shimming (5).

11. Fitting for aircrafts according to claim 10, wherein the gap (8) is filled with a sealant.

12. Fitting for aircrafts according to any one of the previous claims, wherein the first and second sections (11, 12) of each angled piece (1) define a right angle.

13. Fitting for aircrafts according to any one of the previous claims, wherein the first section (11) of each angled piece (1) is longer than the second section (12).

14. Fitting for aircrafts according to any one of the previous claims, wherein each angled piece (1) is joined to the external plate (2) by its second section (12).
